# EUROPÄISCHE PATENTSCHRIFT

(11) **EP 1 570 948 B1**
(45) Veröffentlichungstag und Bekanntmachung des Hinweises auf die Patenterteilung: **24.05.2006**
(21) Anmeldenummer: 04004983.5
(22) Anmeldetag: 03.03.2004
(51) Int. Cl.: B23Q 11/04, B65G 43/02

(54) **Verschleisserfassung durch Transponderzerstörung**
Monitoring wear by transponder destruction
Surveillance de l'usure par destruction d'un transpondeur

(43) Veröffentlichungstag der Anmeldung: 07.09.2005
(73) Patentinhaber: Meri Entsorgungstechnik für die Papierindustrie GmbH, 81673 München (DE)
(72) Erfinder: Menke, Lucas, 81673 München (DE)
(74) Vertreter: Rasch, Michael

(56) Entgegenhaltungen:
- EP-A- 0 753 472
- WO-A-00/53517
- WO-A-02/072452

## Beschreibung

Die Erfindung betrifft ein System zur Erfassung des Verschleißzustandes mechanischem Verschleiß ausgesetzter Maschinenteile mittels einer elektronischen Sende-Empfangseinrichtung und mindestens einer in dem Maschinenteil eingebetteten Transpondereinrichtung, die auf ein von der Sende-Empfangseinrichtung ausgestrahltes Sendesignal hin ein Bestätigungssignal zurücksendet, wobei das Erreichen eines vorgegebenen Verschleißwertes durch die Zerstörung der und dem damit verbundenen Ausbleiben des Bestätigungssignals anzeigbar ist.

In vielen technischen Bereichen des Schwermaschinenbaus werden Maschinenteile eingesetzt, die in ihrer Funktion der Einwirkung großer Kräfte und damit einhergehend einem hohen Verschleiß ausgesetzt sind. Beispielsweise im Bereich der Abfalltrennung und -wiederaufbereitung und Bergwerksmaschinen kommen große Förder- oder Bearbeitungsvorrichtungen wie Bohrer oder Schneckenförderer zum Einsatz, die relativ schnell verschleißen, wobei der Verschleißzustand bzw. das Erreichen einer Verschleißgrenze zuverlässig angezeigt werden muß, damit rechtzeitig das verschlissene Maschinenteil ausgetauscht werden kann.

Aus der DE 102 27 677 ist ein Verfahren zur drahtlosen Überwachung des Zustandes eines einem Verschleiß ausgesetzten Maschinenteils mittels Transpondern beschrieben, wobei eine elektrische Leiterbahnstruktur vorgeschlagen wird, die gemeinsam mit dem Maschinenteil verschlissen wird und diese Leiterbahnstruktur mit einem Transponder in Verbindung steht, und abhängig vom Zustand der Leiterbahnstruktur ein Antwortsignal aussendet. Diese Anordnung ist für den Einsatz bei Maschinenteilen mit großem mechanischem Verschleiß nicht geeignet.

Aus der DE 198 40 081 ist ein System zur Überwachung des Verschleißzustandes einer Schicht bekannt, bei der unterhalb der Schicht ein Transponder vorgesehen ist und in der verschleißenden Schicht eine elektromagnetisch abschirmende Schicht eingebettet ist, welche einen Signalaustausch zwischen Sende-Empfangseinrichtung und Transponder unterbindet, so dass nach deren Zerstörung ein derartiger Signalaustausch möglich wird und dies den Zerstörungszustand anzeigt.

Ein Nachteil dieses Systems besteht darin, dass der Ausfall des Transponders vor der Zerstörung der Abschirmschicht nicht angezeigt wird, weil dieser keine Signale erhält und aussenden kann mit der möglichen Folge, dass die Erfassungseinrichtung in einem derartigen Fall noch von einer intakten Schicht mit eingebetteter Abschirmschicht ausgeht, während die Schicht möglicherweise schon total zerstört ist.

Ein System nach dem Oberbegriff des Anspruchs 1 ist aus der EP-A-0 753 472 bekannt. Dieses bezieht sich auf ein Förderband, in dem Transpondereinrichtungen angeordnet sind, die bei einem bestimmten Verschleißzustand des Förderbandes ausfallen und der Ausfall dann registriert wird. Diese Lehre ist auf hochbelastete metallische Maschinenteile, die unter rauhen Einsatzbedingungen arbeiten, nicht übertragbar.

Hiervon ausgehend liegt der Erfindung die Aufgabe zugrunde, ein gattungsgemäßes Erfassungssystem bereitzustellen, das insbesondere unter besonders rauhen Einsatzbedingungen bei mechanisch stark beanspruchten rotierenden Maschinenenteilen funktioniert.

Erfindungsgemäß wird diese Aufgabe durch die im Anspruch 1 angegebenen Merkmale gelöst. Vorteilhafte Weiterbildungen ergeben sich aus den Unteransprüchen.

Die Erfindung beruht auf der Erkenntnis, dass durch die Anordnung einer Transpondereinrichtung in einer bestimmten Position, die ein Maß für einen vorgebenden Verschleißzustand ist, zum einen vorher durch die Signalreturnierung desselben dessen Betriebsbereitschaft und durch dessen Zerstörung das Erreichen des vorgegebenen Verschleißwertes angezeigt wird. Um unterschiedliche Verschleißzustände anzuzeigen, können dazu mehrere unterschiedliche Signale retournierende Transpondereinrichtungen an unterschiedlichen Positionen (bezüglich des Verschleißzustandes) vorgesehen werden, deren sukzessive Zerstörung eine nach der anderen ein Maß für den Verschleißzustand des Maschinenteils ist.

Dabei arbeitet die Transpondereinrichtung mit Amplitudenmodulation (AM). Dieses Übertragungsverfahren eignet sich besonders für den Einsatz in rotierenden Maschinenteilen, da frequenzmodulierte Transpondereinrichtungen aufgrund der metallischen Umgebung fehlerhafte Signale liefern können. Besonders bevorzugt ist es, wenn die Transpondereinrichtungen nach dem RFID-Prinzip (radio frequency identification) funktioniert.

Ferner ist für eine Transpondereinrichtung in dem Maschinenteil eine in Richtung der Sende-Empfangseinrichtung offene Vertiefung vorgesehen, in welche die Transpondereinrichtung eingesetzt ist. Vorzugsweise am Umfang eines rotierenden Bauteils ist eine radial nach innen gerichtete Vertiefung mit einer vorgegebenen Tiefe eingearbeitet, in der die Transpondereinrichtung eingesetzt ist. Dabei wird diese Vertiefung mit der darin befindlichen Transpondereinrichtung mit einem geeigneten Kunstharz aufgefüllt, das je nach Anwendungsfall hitze- und/oder druckfest ist.

Um die Verschleißfestigkeit weiter zu erhöhen, ist das Kunstharz vorzugsweise mit nichtmetallischen Füllpartikeln versetzt. Eine besondere Verschleißfestigkeit bzw. Härte läßt sich durch keramische Partikel erreichen, die gleichzeitig den Signalfluß zwischen Sende-Empfangseinrichtung und Transpondereinrichtung nicht oder kaum beeinträchtigen.

Als Transponder eignet sich insbesondere einer mit einer Betriebsfrequenz von ca. 50 - 300 kHz, der länglich oder scheibenförmig ausgebildet ist und eine Länge von ca. 10 bis 20 mm aufweist. Besonders geeignete Transponder werden von der Fa. Sokymat S.A., Schweiz hergestellt, vorzugsweise solche mit der Bezeichnung "Glass Tag Unique 3.15 x 13.3" oder "LOGI TAG 120 Unique".

Die Erfindung wird nachfolgend anhand eines bevorzugten Ausführungsbeispiels näher erläutert. Dabei zeigt:
- Fig. 1:: eine perspektivische, teilgeschnittene Darstellung einer Reststoff-Verdichtungsvorrichtung,

- Fig. 2:: einen perspektivischen Ausschnitt eines Förder- und Verdichtungsschneckentriebes in der Vorrichtung gemäß Fig. 1;
- Fig. 3:: eine andere perspektivische Darstellung der Abfallstoff-Verdichtungsvorrichtung gemäß Fig. 1;
- Fig. 4:: einen perspektivischen Ausschnitt des Förder- und Verdichtungsschneckentriebes nach Fig. 3;
- Fig. 5:: eine Axialteilansicht des Verdichtungsschneckentriebs nach Fig. 4.

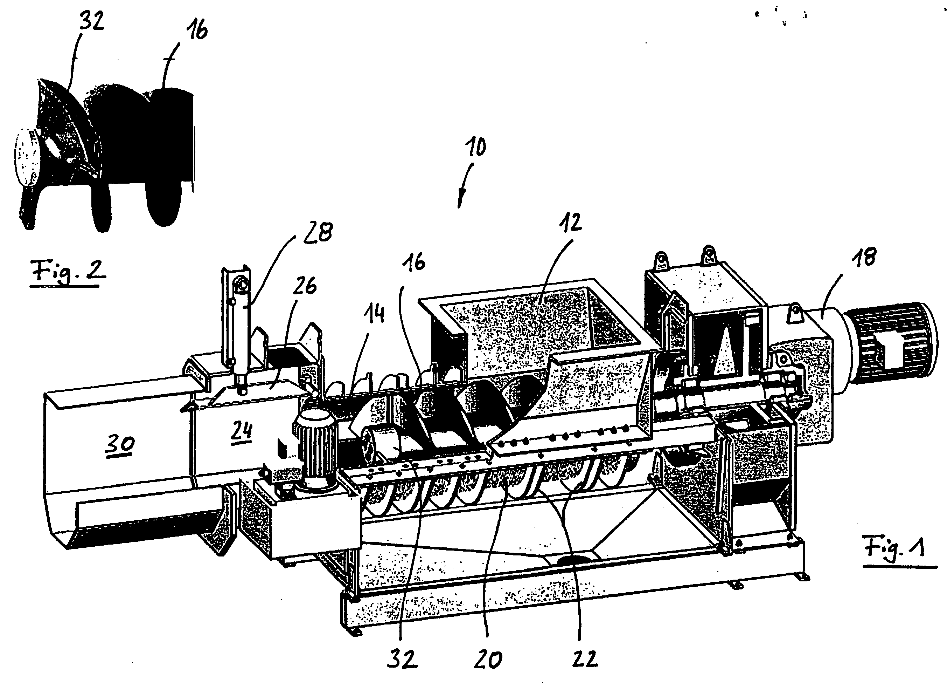

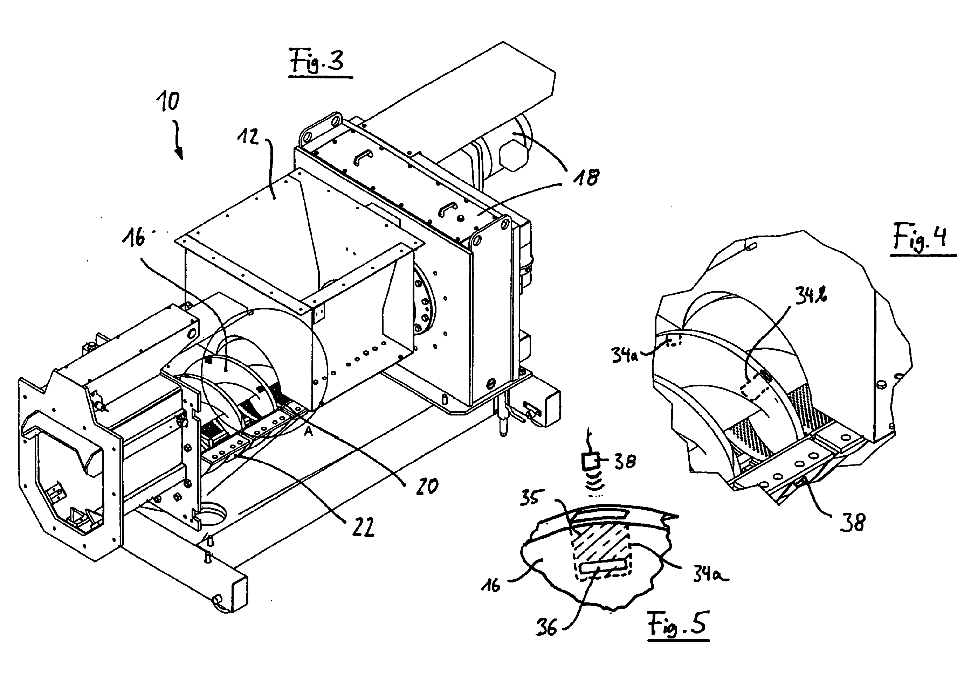

Die **Figuren 1 und 3** zeigen die gleiche Maschine, bei der es sich um eine Reststoff-Verdichtungsvorrichtung **10** (einen sog. Kompakter) für die Reststoffentsorgung aus der Abwasseraufbereitung handelt, bei der die durch verschiedene Trennerfahren abgetrennten Reststoffe (sog. Rejekte) hochgradig verdichtet werden mit dem Ziel einer möglichst großen Kompaktierung. Diese Reststoff-Verdichtungsvorrichtung **10** weist einen Einlass **12** auf, der mit einem zylindrischen Verdichtungsraum **14** kommuniziert, in dem eine Schnecke **16** angeordnet ist, die über eine nicht näher dargestellte Antriebseinrichtung **18** angetrieben wird. Die zylindrische Wandung **20** des Verdichtungsraum **14** ist mit Durchlässen zum Austritt von Flüssigkeit beim Pressvorgang sowie radialen ringförmigen Versteifungsrippen **22** versehen.

Vor dem axialen freien Ende der Schnecke **16** ist eine Presszone **24** vorgesehen, die mindestens eine Pressplatte **26** umfasst, die über eine Hydraulikeinrichtung **28** betätigbar ist. Stromab davon ist ein Auslass **30** für das Pressgut vorgesehen.

Im Betrieb werden die zu pressenden Reststoffe (Rejecte) durch den Einlass **12** eingefüllt und mittels der Schnecke **16** in Richtung der Presszone **24** gefördert und dabei verdichtet, wobei noch enthaltene Flüssigkeit herausgepresst wird und über die Durchlässe in der Wandung **20** austritt. Je nach Menge der anfallenden Reststoffe wird dabei die Pressplatte **26** über die Hydraulikeinrichtung **28** derart eingestellt, dass ein hinreichender Widerstand und damit eine ausreichende Kompaktierung der Reststoffe erreicht wird, die hinter der Presszone **24** dem Pressgutauslass **30** zugeführt werden.

Das vordere Ende der Schnecke **16** kann dabei zur Verminderung des Verschleißes mit einer Verschleißspitze **32** versehen sein, die aus besonders hartem und abriebsfestem Werkstoff besteht und im Fall eines Verschleißes ausgetauscht werden kann, so dass ein Austausch der restlichen, einem verminderten Verschleiß ausgesetzten Schnecke **16** zeitlich verzögert werden kann.

Bei einer derartigen Reststoff-Verdichtungsvorrichtung **10** bestehen die kompaktierten Reststoffe aus unterschiedlich groben und harten Materialien, von Metallteilen über Steine bis zu weicheren und kleineren Teilen. Jedenfalls tragen diese Reststoffe wegen der hohen Druckbelastung zu einem außerordentlichen Verschleiß sowohl der Schnecke **16** als auch und vor allem(soweit vorhanden) der Verschleißspitze **32** bei, die bei normalem Betrieb selbst bei Verwendung härtester Stahllegierungen und Hartbeschichtungen innerhalb von wenigen Monaten ausgetauscht werden müssen. Angesichts dieser harten Einsatzbedingungen ist die Feststellung des Verschleißzustandes der Schnecke **16** bzw. Verschleißspitze **32** im kontinuierlichen Betrieb problematisch, da wegen der Beschaffenheit der Reststoffe sowie der herrschenden Bedingungen im relevanten Bereich nahe der Presszone **24** übliche Meßsysteme problematisch sind.

Gemäß einem bevorzugten Ausführungsbeispiel sind am Umfang der Schnecke **16** mehrere radial nach innen gerichtete Vertiefungen **34a** und **34b** vorgesehen, die unterschiedlich lang in radialer Richtung sind. Im Grundbereich dieser Vertiefungen **34a** und **34b** sind jeweils Transponder **36** angeordnet, bei denen es sich um passive Bauteile handelt, die auf ein elektromagnetisches amplitudenmoduliertes Signal hin ein Antwortsignal abgeben. Eine dafür geeignete Sende-Empfangseinrichtung **38** ist dazu außerhalb der Wandung **20** vorgesehen. Die Vertiefungen **34a** und **34b** sind ferner durch ein Kunstharz **35,** gegebenenfalls mit Keramikpartikeln, aufgefüllt, so dass die Schnecke **16** im Bereich der Vertiefungen **34a** und **34b** etwa die gleichen mechanischen Eigenschaften aufweist wie im übrigen Bereich. Nimmt durch den fortschreitenden Verschleiß der Außendurchmesser der Schnecke 16 ab, so hat dies solange keine Auswirkungen, bis einer der in den Vertiefungen **34a** bzw. **34b** angeordneten Transponder 36 freigelegt und kurz darauf zerstört ist. Damit liefert dieser zerstörte Transponder kein Signal mehr an die Sende-Empfangseinrichtung **38** so dass eine damit gekoppelte nicht dargestellte Auswerteeinheit anzeigt, das die Schnecke **16** bis zur Tiefe der betreffenden Vertiefung verschlissen ist.

Durch die geeignete Anordnung mehrerer Transponder **36** in unterschiedlichen Vertiefung **34a** bzw. **34b** oder Positionen lassen sich verschiedene Verschleißzustände anzeigen. Während in dem vorliegenden Ausführungsbeispiel also eine radiale Durchmesserabnahme angezeigt wird können Transponder **36** auch axialen Verschleiß anzeigen. Dafür ist es nur notwendig, die Vertiefungen aus einer zumindest teilweise radialen Richtung einzulassen, damit die vom Transponder retournierten Signale radial außerhalb der Schnecke **16** erfasst werden können.

## Patentansprüche

1. System zur Erfassung des Verschleißzustandes mechanischem Verschleiß ausgesetzter Maschinenteile mittels einer elektronischen Sende-Empfangseinrichtung (38) und mindestens einer in dem Maschinenteil (16) eingebetteten Transpondereinrichtung (36), die auf ein von der Sende-Empfangseinrichtung (38) ausgestrahltes Sendesignal hin ein Bestätigungssignal zurücksendet, wobei das Erreichen eines vorgegebenen Verschleißwertes durch die Zerstörung der Transpondereinrichtung (36) und dem damit verbundenen Ausbleiben des Bestätigungssignals anzeigbar ist, **dadurch gekennzeichnet, dass** das Maschinenteil eine Stempelpresse, ein Schneckenförderer (16) oder eine Schneckenpresse ist und die Transpondereinrichtung (36) mit Amplitudenmodulation (AM) arbeitet, wobei diese in dem Maschinenteil (16) einer in Richtung der Sende-Empfangseinrichtung (38) offenen Vertiefung (34) eingesetzt ist und die Vertiefung mit der darin befindlichen Transpondereinrichtung (36) mit Kunstharz (35) aufgefüllt ist.

2. Erfassungssystem nach Anspruch 1, **dadurch gekennzeichnet, dass** die Transpondereinrichtung (36) nach dem RFID-Prinzip (radio frequency identification) funktioniert.

3. Erfassungssystem nach Anspruch 1, **dadurch gekennzeichnet, dass** in dem Maschinenteil (16) mehrere Transpondereinrichtungen (36) in unterschiedlichen Verschleißzustandspositionen eingesetzt sind und deren jeweilige Zerstörung ein Maß für den Verschleißzustand des Maschinenteils (16) ist.

4. Erfassungssystem nach Anspruch 1, **dadurch gekennzeichnet, dass** das Kunstharz (35) mit nichtmetallischen Füllpartikeln, vorzugsweise aus Keramik, versetzt ist.

5. Erfassungssystem nach Anspruch 1, **dadurch gekennzeichnet, dass** zwischen 2 und 10 Transpondereinrichtungen (36) am Umfang verteilt in unterschiedlichen radialen Abständen zum Drehpunkt angeordnet sind.

6. Erfassungssystem nach Anspruch 5, **dadurch gekennzeichnet, dass** die Transpondereinrichtungen (36) unterschiedliche Kennungssignale zu deren Unterscheidung aufweisen.

7. Erfassungssystem nach Anspruch 1, **dadurch gekennzeichnet, dass** dieses in einer Reststoff-Verdichtungsvorrichtung (10) eingesetzt ist, wobei mehrere radiale Vertiefungen am Außenumfang der Schnecke (16) eingearbeitet sind.

## Claims

1. A system for sensing the wear condition of machine parts exposed to mechanical wear by means of an electronic transceiver (38) and, embedded in the machine part (16), at least one transponder (36) which returns a confirmation signal in response to a transmission signal emitted by the transceiver (38), indicating when a predefined wear value is attained due to the destruction of the transponder (36) and absence of the confirmation signal involved, **characterized in that** the machine part is a ram compactor, a screw conveyor (16) or screw compactor and the transponder (36) works with amplitude modulation (AM) which is nested in a recess (34) open in the direction of the transceiver (38) in the machine part (16) and the recess nesting the transponder (36) is potted with synthetic resin (35).

2. The sensing system as set forth in claim 1,
**characterized in that** the transponder (36) functions in accordance with the principle of radio frequency identification (RFID).

3. The sensing system as set forth in claim 1,
**characterized in that** a plurality of transponders (36) is provided in the machine part (16) at differing wear condition locations, the successive destruction of each of which is a measure of the wear condition of the machine part (16).

4. The sensing system as set forth in claim 1, **characterized in that** the synthetic resin (35) is aggregated with non-metallic filler particles, preferably of ceramic.

5. The sensing system as set forth in claim 1, **characterized in that** between 2 and 10 transponders (36) are disposed differingly radially distributed about the circumference relative to the fulcrum.

6. The sensing system as set forth in claim 5,
**characterized in that** the transponders (36) furnish differing ID signals to distinguish them.

7. The sensing system as set forth in claim 1, **characterized by** it being employed in a rejects compactor (10), a plurality of radial recesses being machined in the outer circumference of the screw (16).

## Revendications

1. Système de détection de l'état d'usure de pièces de machine exposées à une usure mécanique, au moyen d'un dispositif électronique d'émission et de réception (38) et d'au moins un dispositif transpondeur (36) incorporé dans la pièce de machine (16) et qui renvoie un signal de confirmation en réponse à un signal d'émission émis par le dispositif (38) d'émission et de réception, l'atteinte d'une valeur prédéterminée de l'usure pouvant être indiquée par la destruction du dispositif transpondeur (36) et la disparition qui y est associée du signal de confirmation, **caractérisé en ce que** la pièce de machine est une presse à poussoir, un transporteur à vis (16) ou une presse à vis, le dispositif transpondeur (36) travaillant en modulation d'amplitude (AM) et étant placé dans un creux (34) de la pièce de machine (16) qui est ouvert en direction du dispositif (38) d'émission et de réception, le creux avec le dispositif transpondeur (36) qui y est placé étant rempli de résine synthétique (35).

2. Système de détection selon la revendication 1, **caractérisé en ce que** le dispositif transpondeur (36) fonctionne selon le principe RFID ("radio frequency identification" - identification à fréquence radio).

3. Système de détection selon la revendication 1, **caractérisé en ce que** plusieurs dispositifs transpondeurs (36) sont utilisés en différentes positions d'usure de la pièce de machine (16), leur destruction constituant une mesure de l'état d'usure de la pièce de machine (16).

4. Système de détection selon la revendication 1, **caractérisé en ce qu'**on ajoute à la résine synthétique (35) des particules de charge non métalliques, de préférence en céramique.

5. Système de détection selon la revendication 1, **caractérisé en ce qu'**entre 2 et 10 dispositifs transpondeurs (36) sont répartis à la périphérie à différentes distances radiales par rapport au centre de rotation.

6. Système de détection selon la revendication 5, **caractérisé en ce que** les signaux d'identification des dispositifs transpondeurs (36) sont différents, ce qui permet de les distinguer.

7. Système de détection selon la revendication 1, **caractérisé en ce qu'**il est utilisé dans un dispositif (10) de compactage de résidus, plusieurs creux radiaux étant ménagés à la périphérie extérieure de la vis (16).
